(19) 

Europäisches
Patentamt
European
Patent Office
Office européen
des brevets

(11) **EP 3 848 838 A1**

(12) **EUROPEAN PATENT APPLICATION**
published in accordance with Art. 153(4) EPC

(43) Date of publication:
**14.07.2021 Bulletin 2021/28**

(21) Application number: **19847381.1**

(22) Date of filing: **28.03.2019**

(51) Int Cl.:
**G06F 21/60** (2013.01)

(86) International application number:
**PCT/CN2019/079997**

(87) International publication number:
**WO 2020/029589 (13.02.2020 Gazette 2020/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(30) Priority: **10.08.2018 CN 201810913275**

(71) Applicant: **Webank Co.,Ltd
Shenzhen, Guangdong 518000 (CN)**

(72) Inventors:
• **FAN, Tao
Shenzhen, Guangdong 518000 (CN)**

• **MA, Guoqiang
Shenzhen, Guangdong 518000 (CN)**
• **CHEN, Tianjian
Shenzhen, Guangdong 518000 (CN)**
• **YANG, Qiang
Shenzhen, Guangdong 518000 (CN)**
• **LIU, Yang
Shenzhen, Guangdong 518000 (CN)**

(74) Representative: **Osterhoff, Utz
Bockermann Ksoll
Griepenstroh Osterhoff
Patentanwälte
Bergstraße 159
44791 Bochum (DE)**

(54) **MODEL PARAMETER ACQUISITION METHOD AND SYSTEM BASED ON FEDERATED LEARNING, AND READABLE STORAGE MEDIUM**

(57) Disclosed are a model parameter acquisition method and system based on federated learning, and a readable storage medium. The method comprises the steps of: after a third terminal receives an encrypted loss value sent by a second terminal, the third terminal decrypting the loss value to obtain the decrypted loss value, wherein the loss value is obtained through calculation according to first data corresponding to a first terminal and second data corresponding to the second terminal (S10); detecting, according to the decrypted loss value, whether a model to be trained is in a converged state (S20); if it is detected that the model to be trained is in a converged state, acquiring a gradient value corresponding to the loss value (S30); and determining a sample parameter corresponding to the gradient value, and determining the sample parameter corresponding to the gradient value to be a model parameter of the model to be trained (S40). According to the method, a loss value is obtained through calculation and by combining sample data of a first terminal and a second terminal, so as to jointly help learning by combining the sample data of the first terminal and the second terminal to determine a model parameter in a model to be trained, thereby improving the accuracy of the trained model.

FIG. 2

**Description**

**CROSS-REFERENCE OF RELATED APPLICATION**

The present disclosure claims the priority of a Chinese patent application filed in the National Intellectual Property Administration on Friday, August 10, 2018 with application number 201810913275.2 and Title "Federated-learning based method of acquiring model parameters, system and readable storage medium", the entire contents of which are hereby incorporated by references.

**FIELD OF THE DISCLOSURE**

The present disclosure relates to the technical field of data processing, in particular to a federated-learning based method of acquiring model parameters, a system, and a readable storage medium.

**BACKGROUND OF THE DISCLOSURE**

Machine learning is booming and has been applied in various fields, including data mining, computer vision, natural language processing, biometric identification, medical diagnosis, detection of credit card fraud, securities market analysis and DNA (deoxyribonucleic acid) sequence sequencing, etc. The system for machine learning typically provides sample data, using which to modify the knowledge base of the system for learning, and to improve efficiency of the system execution to complete the task. The task is completed according to the knowledge base in execution process and the obtained information has been fed back for further learning.

At present, sample data of all parties are closely related, and if machine learning uses only the sample data of one party, the model obtained by learning is not quite accurate. Therefore, how to jointly use the sample data of all parties to obtain the parameters in the model and improve the accuracy of the model is an urgent problem to be solved.

**SUMMARY OF THE DISCLOSURE**

The present disclosure is to provide a federated-learning based method, a system and a readable storage medium of acquiring model parameters, aiming at solving the existing technical problem of how to jointly use data from all parties and improve the accuracy of the obtained model.

As such, the present disclosure provides a federated-learning method, which includes the following operations:

receiving, by a third terminal, an encrypted loss value sent by a second terminal, and decrypting the encrypted loss value to obtain a loss value after decrypting, where the loss value is calculated according to first data of a first terminal and second data of the second terminal;

detecting whether a model to be trained is at convergence according to the loss value after decrypting;

in response that the model to be trained is at convergence, acquiring a gradient corresponding to the loss value;

determining a sample parameter corresponding to the gradient, and determining the sample parameter as a model parameter of the model to be trained.

Preferably, prior to the operation of "receiving, by a third terminal, an encrypted loss value sent by a second terminal, and decrypting the encrypted loss value to obtain a loss value after decrypting", the method further includes:

receiving, by the second terminal, the first data which is encrypted and sent by the first terminal; calculating the second data corresponding to the first data and

acquiring a first sample label corresponding to the second data, where a second sample label corresponding to the first data is identical to the first sample label corresponding to the second data;

calculating the loss value according to the first sample label, the first data and the second data; and

encrypting the loss value by a homomorphic encryption algorithm to obtain the encrypted loss value, and sending the encrypted loss value to the third terminal.

Preferably, after the operation of "detecting whether the model to be trained is at convergence according to the loss value", the method further includes:

in response that the model to be trained is not at convergence, acquiring a first gradient and a second gradient respectively sent by the second terminal and the first terminal and updating the gradients to obtain the updated gradients;

sending the updated gradients to the first terminal and the second terminal, to allow the first terminal and the second terminal to update respective sample parameters according to the updated gradients;

where, after the first terminal updates the sample parameter, the first terminal calculates the first data according to the updated sample parameter and a variable corresponding to a feature variable in intersection sample data, encrypts the first data, and sends the first data which is encrypted to the second terminal.

Preferably, the operation of "the second terminal to correspondingly update a sample parameter according to the updated second gradient", comprises:

receiving, by the second terminal, the updated second gradient, calculating a product of the updated second gradient and a preset coefficient; and

subtracting the product from the second sample parameter before updating, to obtain the updated second sample parameter.

Preferably, prior to the operation of "receiving the encrypted loss value, by the third terminal, and decrypting the encrypted loss value to obtain the loss value after decryption", the method further includes:

encrypting, by the first terminal, a first sample identifier with a pre-stored first public key, sending the encrypted first sample identifier to the second terminal, and detecting whether a second sample identifier sent by the second terminal is received, where the second sample identifier is encrypted by the second terminal with a pre-stored second public key;

in response that the encrypted second sample identifier is received, secondarily encrypting on the second sample identifier with the first public key to obtain a second encrypted value, and detecting whether a first encrypted value sent by the second terminal is received;

in response that the first encrypted value is received, judging whether the first encrypted value is equal to the second encrypted value,

in response that the first encrypted value is equal to the second encrypted value, determining that the first sample identifier is the same as the second sample identifier, and determining sample data corresponding to the first sample identifier as the intersection sample data intersected with the second terminal.

Preferably, after the operation of "determining a sample parameter corresponding to the gradient, and determining the sample parameter as a model parameter of the model to be trained", the method further includes:

in response that the second terminal determines a model parameter corresponding to the second terminal, and receives a request to execute the model parameter, sending, by the second terminal, the request to the first terminal, receiving a first prediction score from the first terminal, where the first prediction score is obtained according to a model parameter corresponding to the first terminal, and a variable of feature variables corresponding to the request;

receiving, by the second terminal, the first prediction score, calculating a second prediction score according to the model parameter corresponding to the second terminal, and the variable of the feature variable corresponding to the request; and

adding the first prediction score and the second prediction score to obtain a summed prediction score, inputting the summed prediction score into the model to be trained and obtaining a model score, and determining whether to execute the request according to the model score.

Preferably, the operation of "detecting whether the model to be trained is at convergence according to the loss value", the method further includes:

acquiring a previous loss value sent by the second terminal, and recording the previous loss value as a first loss value, and recording the loss value after decryption as a second loss value;

calculating a difference between the first loss value and the second loss value, and judging whether the difference is less than or equal to a preset threshold value;

in response that the difference is less than or equal to the preset threshold, determining that the model to be trained is at convergence;

in response that the difference is more than the preset threshold, determining that the model to be trained is not at convergence.

Further, in order to achieve the above object, the present disclosure provides a federated-learning based system of acquiring a model parameter, which comprises a memory, a processor, and a program regarding federated-learning based for acquiring a model parameter which is stored in the memory and executable on the processor, and when the program is executed by the processor, the operation to realize the federated-learning based method of acquiring model parameter as described above is implemented.

Further, in order to achieve the above purpose, the present disclosure provides a computer readable storage medium, on which a program which is federated-learning based for acquiring a model parameter is stored, and when the program is executed by a processor, the operation to realize the federated-learning based method of acquiring model parameter as described above is implemented.

The present disclosure provides the method of acquiring the model parameter by: calculating first data of a first terminal and second data of a second terminal to obtain a loss value; and encrypting, by the second terminal, the loss value, and sending, the encrypted loss value to a third terminal; receiving the encrypted loss value sent by the second terminal, by the third terminal, and decrypting the encrypted loss value to obtain the loss value; detecting whether the model to be trained is at convergence according to the loss value after decrypting; in response that the model to be trained is at convergence, acquiring a gradient corresponding to the loss value; and determining a sample parameter corresponding to the gradient, and determining the sample parameter as a model parameter of the model to be trained. According to the present disclosure, the loss value is calculated by jointly using the sample data of the first terminal and the second terminal. The model parameter in the model to be trained can be determined by jointly learning from the sample data of the first terminal and the second terminal, and the accuracy of the trained model is improved.

## BRIEF DESCRIPTION OF THE DRAWINGS

Fig. 1 is a schematic diagram of hardware operating environment involved in aspects of the present disclosure.

Fig. 2 is a schematic flow chart of a federated-learning based method of acquiring a model parameter according to a first aspect the present disclosure.

Fig. 3 is a schematic flow chart of a federated-learning based method of acquiring a model parameter according to a second aspect the present disclosure.

Fig. 4 is a schematic flow chart of a federated-learning based method of acquiring a model parameter according to a third aspect the present disclosure.

The implementation, functional features and advantages of the present disclosure will be further described with reference to the accompanying drawings with the embodiments.

## DETAILED DESCRIPTION OF THE EMBODIMENTS

It should be understood that the specific embodiments described herein are only for the purpose of explaining the present disclosure and are not intended to limit the present disclosure.

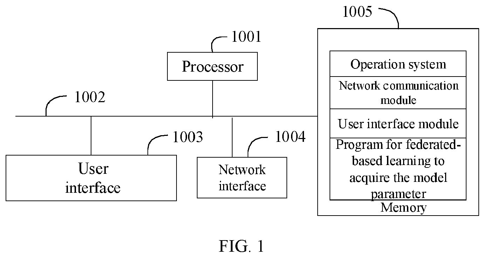

As shown in Fig. 1, which is a schematic structural diagram of a hardware operating environment according to an aspect of the present disclosure.

It should be noted that Fig. 1 is a schematic structural diagram of the hardware operating environment of the system. The system in the embodiments of the present disclosure can be a terminal device such as a PC, a portable computer and the like.

As shown in Fig. 1, the system of acquiring a model parameter may include a processor 1001, such as a CPU, a network interface 1004, a user interface 1003, a memory 1005, and a communication bus 1002. In which, the communication bus 1002 is configured to implement connection and communication between these components. The user interface 1003 may include a display, an input unit such as a keyboard, and the user interface 1003 may optionally further include a standard wired interface and a wireless interface. The network interface 1004 may optionally include a standard wired interface and a wireless interface (such as a WI-FI interface). The memory 1005 may be a high speed RAM memory or a non-volatile memory such as a disk memory. The memory 1005 may alternatively be a storage device independent of the aforementioned processor 1001,

It can be understood by those skilled in the art that the structure of the system shown in Fig. 1 does not constitute a limitation of the system, and may include more or fewer components than shown, or combine some components, or arrange different components.

As shown in Fig. 1, the memory 1005 as a computer storage medium may include an operating system, a network communication module, a user interface module, and program for acquiring a model parameter based on federated learning. In which, the operating system is a program that manages and controls the hardware and software resources of the system, and supports the operation of the program for acquiring a model parameter based on federated learning and some other software or programs.

In the system shown in Fig. 1, the user interface 1003 is mainly configured to connect with a first terminal, a second terminal and a third terminal, etc., for data communication with each terminal. The network interface 1004 is mainly configured to connect with the background server for data communication with the background server. The processor 1001 can be configured to call the program for acquiring a model parameter based on federated learning stored in the memory 1005, and perform the following operations:

calculating first data of a first terminal and second data of a second terminal to obtain a loss value; and encrypting, by the second terminal, the loss value, and sending, the encrypted loss value to a third terminal; receiving the encrypted loss value sent by the second terminal, by the third terminal, and decrypting the encrypted loss value to obtain the loss value;

detecting whether a model to be trained is at convergence according to the loss value after decrypting;

in response that the model to be trained is at convergence, acquiring a gradient corresponding to the loss value; and

determining a sample parameter corresponding to the gradient, and determining the sample parameter as a model parameter of the model to be trained.

Furthermore, before the operation of "receiving the encrypted loss value sent by the second terminal, by the third terminal, and decrypting the encrypted loss value to obtain the loss value", the processor 1001 may also be configured to call the program stored in the memory 1005 and execute the following operations:

receiving, by the second terminal, the first data which is encrypted and sent by the first terminal; controlling to calculate the second data corresponding to the first data and acquiring a first sample label corresponding to the second data, where a second sample label corresponding to the first data is identical to the first sample label corresponding to the second data;

calculating the loss value according to the first sample label, the first data and the second data;

encrypting the loss value by a homomorphic encryption algorithm to obtain the encrypted loss value, and sending the encrypted loss value to the third terminal.

Further, after the operation of "detecting whether a model to be trained is at convergence according to the loss value", the processor 1001 may also be configured to call the program stored in the memory 1005, and execute the following operations:

in response that the model to be trained is not at convergence, acquiring a gradient sent by the second terminal and the first terminal and updating the gradient to obtain the updated gradients;

sending the updated gradient to the second terminal, to allow the first terminal to correspondingly update a sample parameter according to the updated first gradient, and the second terminal to correspondingly update a sample parameter according to the updated second gradient;

where, after the first terminal updates the first sample parameter, the first terminal calculates the first data according to the updated first sample parameter and a variable corresponding to a feature variable in intersection sample data, encrypts the first data, and sends the first data which is encrypted to the second terminal.

Further, the operation of "the second terminal to correspondingly update a sample parameter according to the updated second gradient", includes:

receiving, by the second terminal, the updated second gradient, calculating a product of the updated second gradient and a preset coefficient; and

subtracting the product from a sample parameter before updating, to obtain the updated second sample parameter.

Furthermore, before the operation of "receiving the encrypted loss value sent by the second terminal, by the third terminal, and decrypting the encrypted loss value to obtain the loss value", the processor 1001 may also be configured to call the program stored in the memory 1005 and execute the following operations:

encrypting, by the first terminal, a first sample identifier with a pre-stored first public key, sending the encrypted first sample identifier to the second terminal, and detecting, by the first terminal, whether a second sample identifier sent by the second terminal is received, wherein the second sample identifier is encrypted by the second terminal with a pre-stored second public key;

in response that the encrypted second sample identifier is received, secondarily encrypting the second sample identifier with the first public key to obtain a second encrypted value, and detecting whether a first encrypted value sent by the second terminal is received;

in response that the first encrypted value is received, judging whether the first encrypted value is equal to the second encrypted value; and

in response that the first encrypted value is equal to the second encrypted value, determining that the first sample identifier is the same as the second sample identifier, and determining sample data corresponding to the first sample identifier as the intersection sample data intersected with the second terminal.

Further, after the operation of "determining a sample parameter corresponding to the gradient, and determining the sample parameter as a model parameter of the model to be trained", the processor 1001 may also be configured to call the program based on federated learning stored in the memory 1005 and execute the following operations:

in response that the second terminal determines a model parameter corresponding to the second terminal, and receives a request to execute the model parameter, sending, by the second terminal, the request to the first terminal, wherein after the first terminal receives the request, the first terminal returns a first prediction score to the second terminal, where the first prediction score is obtained according to a model parameter corresponding to the first terminal, and a variable of feature variables corresponding to the request;

receiving, by the second terminal, the first prediction score, calculating a second prediction score according to the model parameter corresponding to the second terminal, and the variable of the feature variable corresponding to the request; and

adding the first prediction score and the second prediction score to obtain a summed prediction score, inputting the summed prediction score into the model to be trained and obtaining a model score, and determining whether to execute the request according to the model score.

Further, the operation of "detecting whether the model to be trained is at convergence according to the loss value", the method further includes:

acquiring a previous loss value sent by the second terminal for a last time, and recording the previous loss value as a first loss value, and recording the loss value after decryption as a second loss value;

calculating a difference between the first loss value and the second loss value, and judging whether the difference is less than or equal to a preset threshold value;

in response that the difference is less than or equal to the preset threshold, determining that the model to be trained is at convergence; or

in response that the difference is more than the preset threshold, determining that the model to be trained is not at convergence.

Based on the above structure, various aspects regarding the federated-learning based method of acquiring the model parameter are proposed.

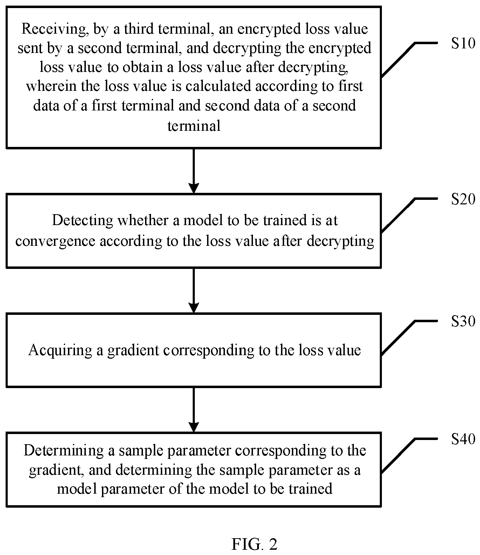

Fig. 2 is referred to, which is a schematic flow chart of a federated-learning based method of acquiring a model parameter according to a first aspect the present disclosure.

The aspects of the present disclosure provides an aspect regarding a federated-learning based method of acquiring the model parameter. It should be noted that although a logical sequence is shown in the flowchart, in some cases, the operations shown or described can be performed in a different order.

Federated-learning based method of acquiring model parameters, includes:

operation S10, calculating first data of a first terminal and second data of a second terminal to obtain a loss value; and encrypting, by the second terminal, the loss value, and sending, the encrypted loss value to a third terminal; receiving the encrypted loss value sent by the second terminal, and decrypting the encrypted loss value to obtain the loss value, by the third terminal.

After receiving the encrypted loss value sent from the second terminal, the third terminal decrypts the encrypted loss value to obtain the loss value. It should be noted that the loss value is calculated by the second terminal according to the first data sent by the first terminal and the second data corresponding to the first data. The first data is calculated by the first terminal based on sample data and corresponding sample parameter, and the second data is calculated by the second terminal based on sample data and corresponding sample parameter. Several calculation factors are included in the loss value. In this aspect, the second terminal encrypts each calculation factor by homomorphic encryption addition algorithm using the public key sent by the third terminal to obtain encrypted calculation factors, adds the encrypted calculation factors to obtain an encrypted loss value, and sends the encrypted loss value to the third terminal. The third terminal receives the encrypted loss value, and obtains the encrypted calculation factors corresponding to the encrypted loss value. The third terminal then decrypts these encrypted calculation factors through private keys corresponding to the public key regarding the second terminal's encrypted calculation factors to obtain original calculation factors, and obtains the decrypted loss value through these original calculation factors. The third terminal generates a public key and a private key using an asymmetric encryption algorithm, and sends the respective public key to the first terminal and the second terminal, so that the first terminal and the second terminal can encrypt the data to be sent according to the public key. The first terminal, the second terminal and the third terminal can be smart phones, personal computers, servers and the like.

Operation S20, detecting whether a model to be trained is at convergence according to the loss value after decrypting.

When the third terminal obtains the loss value after decrypting, the third terminal detects whether the model to be trained is at convergence according to the loss value.

Further, operation S20 includes:

operation a: acquiring a previous loss value sent by the second terminal for a last time, and recording the previous loss value as a first loss value, and recording the loss value after decryption as a second loss value.

Specifically, after the third terminal obtains the decrypted loss value, the third terminal obtains the loss value sent by the second terminal last time and record it as the first loss value. It then records the decrypted loss value as the second loss value. It should be noted that when the model to be trained is not at convergence, the second terminal will continue to send a loss value to the third terminal until the model to be trained reaches convergence. And the loss value is a value that is decrypted by the third terminal. It can be understood that the first loss value is the previous loss value sent by the second terminal last time, and the second loss value is the current loss value after decryption sent by the second terminal.

Operation b: calculating a difference between the first loss value and the second loss value, and judging whether the difference is less than or equal to a preset threshold value.

Operation c: in response that the difference is less than or equal to the preset threshold, determining that the model to be trained is at convergence.

Operation d: in response that the difference is more than the preset threshold, determining that the model to be trained is not at convergence.

After the third terminal obtains the first loss value and the second loss value, the third terminal calculates the difference between the first loss value and the second loss value and judges whether the difference is less than or equal to a preset threshold. If determining that the difference value is less than or equal to a preset threshold value, the third terminal determines that the model to be trained is at convergence; or if determining that the difference value is greater than the preset threshold value, the third terminal determines that the model to be trained is not at convergence. Where, the specific value of the preset threshold can be set according to specific needs, and the corresponding value of the preset threshold is not specifically limited herein in the embodiments.

Operation S30, in response that the model to be trained is at convergence, acquiring a gradient corresponding to the loss value.

Operation S40, determining a sample parameter corresponding to the gradient, and determining the sample parameter as a model parameter of the model to be trained.

If it is detected that the model to be trained is at convergence, the third terminal acquires the gradient corresponding to the loss value, and determines the sample parameter corresponding to the gradient as the model parameter of the model to be trained. It should be noted that two gradients are corresponding to the loss value, namely the gradient sent by the first terminal to the third terminal, and the gradient sent by the second terminal to the third terminal. After the first terminal calculates its corresponding gradient, the first terminal encrypts the gradient and sends the encrypted gradient to the third terminal. And the second terminal will send the encrypted gradient together when sending the encrypted loss value to the third terminal. Where the method of encrypting the gradient and the encryption loss value by the second terminal is the same, so it will be omitted in detail herein. The method of encrypting the gradient by the first terminal is the same as that of encrypting the gradient by the second terminal, which will also be omitted in detail herein.

The loss value and encryption value sent by the second terminal to the third terminal are calculated based on the sample parameters corresponding to the first terminal and the second terminal, the variables corresponding to the feature variables, and the sample label values corresponding to the intersection sample data of the second terminal. Where, the sample parameters corresponding to the first terminal and the second terminal may be same or different. The gradient and loss value will be iterated during the acquisition of the model parameter, until the model to be trained reach convergent. In the model to be trained, there exists model parameters corresponding to the first terminal and model parameters corresponding to the second terminal.

When detecting that the model to be trained is at convergence, the third terminal can take the sample parameters corresponding to the first terminal as the model parameter corresponding to the first terminal in the calculation of gradient of the model to be trained, and the sample parameters corresponding to the second terminal as the model parameters corresponding to the second terminal in the calculation of gradient of the model to be trained.

Further, once the third terminal determines its model parameters, it will send a prompt message to the first terminal and the second terminal, to provide and indicate the model parameters corresponding respectively to the first terminal and the second terminal according to the prompt information. It should be noted that both the first terminal and the second terminal have corresponding and respective model parameters. The model parameters corresponding to the first terminal is stored in the first terminal and the model parameters corresponding to the second terminal is stored in the second terminal.

It provides the federated-learning based method of acquiring the model parameter by: calculating first data of a first terminal and second data of a second terminal to obtain a loss value; and encrypting, by the second terminal, the loss value, and sending, the encrypted loss value to a third terminal; receiving the encrypted loss value sent by the second terminal, by the third terminal, and decrypting the encrypted loss value to obtain the loss value; detecting whether the model to be trained is at convergence according to the loss value after decrypting; in response that the model to be trained is at convergence, acquiring a gradient corresponding to the loss value; and determining a sample parameter corresponding to the gradient, and determining the sample parameter as a model parameter of the model to be trained. The loss value is calculated by jointly using the sample data of the first terminal and the second terminal. The model parameter in the model to be trained can be determined by jointly learning from the sample data of the first terminal and the second terminal, and the accuracy of the trained model is improved.

Further, the second aspect is proposed regarding the federated-learning based method of acquiring the model parameter in the present disclosure.

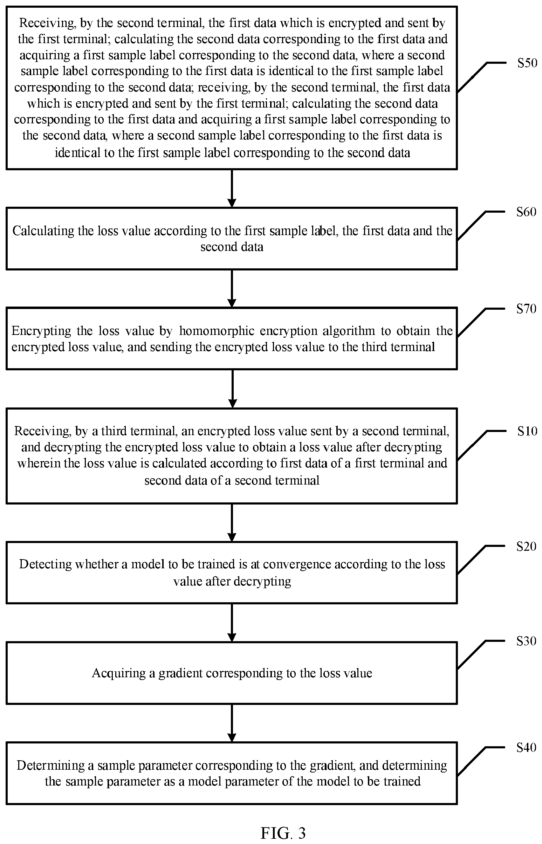

The difference between the second embodiment and the first embodiment lies in that, referring to Fig. 3, the method further includes:

operation S50, receiving, by the second terminal, the first data which is encrypted and sent by the first terminal; calculating the second data corresponding to the first data and acquiring a first sample label corresponding to the second data, where a sample label corresponding to the first data is identical to the sample label corresponding to the second data.

After receiving the first data which is encrypted and sent by the first terminal, the second terminal calculates the second data corresponding to the first data and acquires a first sample label corresponding to the second data, where a second sample label corresponding to the first data is identical to the first sample label corresponding to the second data. The first data is the sum of the product of the sample parameters in the first terminal and the variables corresponding to the feature variables in the intersection sample data of the first terminal, and also the square of the summed product. The original first data is calculated by

$$u_A = w_A^T x_A = w_1 x_{i1} + w_2 x_{i2} \cdots w_n x_{in}$$

, and the square of the sum of products is $u_A^2$, where $w_1$, $w_2...w_n$ represents the sample parameters corresponding to the first terminal, and the number of variables corresponding to feature variables in the first terminal is equal to that of sample parameters corresponding to the first terminal. That is, one variable corresponds to one sample parameter, x represents the characteristic value of feature variables, and 1,2... n represents the number of corresponding variables and sample parameters. If there are three variables for each feature variable in the first terminal intersection sample data,

$$u_A = w_A^T x_A = w_1 x_{i1} + w_2 x_{i2} + w_3 x_{i3}$$

. It should be noted that the first data sent by the first terminal to the second terminal is encrypted first data. After the first terminal has the first data by calculation, it uses the public key sent by the third terminal to encrypt this first data by homomorphic encryption algorithm to obtain the encrypted first data, and then sends the encrypted first data to the second terminal. Where the first data sent to the second terminal, that is, the encrypted first data can be expressed as $[[u_A]]$ and $[[u_A^2]]$.

The calculation regarding the second data by the second terminal is similar to the calculation regarding the first data by the first terminal. For example, the formula for calculating the summed product of sample parameters in the second terminal and variables corresponding to feature variables in the intersection sample data of the second terminal is

$$u_B = w_B^T x_B = w_1 x_{i1} + w_2 x_{i2} \cdots w_n x_{in}$$

, where $w_1$, $w_2...w_n$ represents sample parameters corresponding to characteristic value of each feature variable of sample data in the second terminal. It should be noted that the sample identifiers corresponding to the first data and the second data are the same. In the sample data of the first terminal and the second terminal, each sample data has a corresponding sample identifier. The sample data of the first terminal does not have a sample label, while the sample data of the second terminal has a sample label, and one sample identifier corresponds to one sample label. Each sample data has at least one feature variable, and each feature variable has at least one variable value. In the first terminal, the sample identifier of each sample data is different between each other, and in the second terminal, the sample identifier of each sample data is also different between each other. However, the sample labels corresponding to different sample data can be the same or different.

Operation S60, calculating the loss value according to the first sample label, the first data and the second data.

Operation S70, encrypting the loss value by homomorphic encryption algorithm to obtain the encrypted loss value, and sending the encrypted loss value to the third terminal.

After the second terminal obtains the sample label corresponding to the second data, the first data sent by the first terminal and the calculated second data, the second terminal calculates the loss value according to a label value corresponding to the sample label, the first data and the second data.

In one aspect, the loss value is expressed as loss, and the encrypted loss value *loss*

$$= \log 2 - \frac{1}{2} y w^T x + \frac{1}{8} \left( w^T x \right)^2$$

, is expressed as $[[loss]]$,

$$[[loss]] = [[\log 2]] + \left( -\frac{1}{2} \right) * [[y w^T x]] + \frac{1}{8} [[ \left( w^T x \right)^2 ]]$$,

$$u = w^T x = w_A^T x_A + w_B^T x_B,\quad [[u]] = [[u_A + u_B]] = [[u_A]] + [[u_B]],$$

$$\left( w^T x \right)^2 = u^2 = \left( u_A + u_B \right)^2 = u_A^2 + u_B^2 + 2 u_A u_B,$$

$$\left[\!\!\left[\left(w^{T}x\right)^{2}\right]\!\!\right] = \left[\!\!\left[\left(u\right)^{2}\right]\!\!\right] = \left[\!\!\left[u_{A}^{\ 2}\right]\!\!\right] + \left[\!\!\left[u_{B}^{\ 2}\right]\!\!\right] + \left[\!\!\left[2u_{A}u_{B}\right]\!\!\right] = \left[\!\!\left[u_{A}^{\ 2}\right]\!\!\right] + \left[\!\!\left[u_{B}^{\ 2}\right]\!\!\right] + 2u_{B}\left[\!\!\left[u_{A}\right]\!\!\right];$$

where Y represents the label value of the sample label corresponding to the second data, and the label value corresponding to the sample label can be set according to specific needs. For example, "0" and "1" can be configured to represent the label values corresponding to different sample labels.

After the second terminal calculates the loss value, the second terminal uses the public key sent by the third terminal to encrypt the calculation factors of each calculated loss value by a homomorphic encryption algorithm to obtain the encrypted loss value, and sends the encrypted loss value to the third terminal. Where log2, $yw^{Tx}$, and $(w^{T}x)^{2}$ are the calculation factors for calculating the loss value. It should be noted that, [[x]] is used to represent x after encryption.

It should be noted that in one aspect, the first terminal and the second terminal both have independent parameter servers, which are used to synchronize the aggregation and update of their respective sample data and avoid the leakage of their respective sample data. Further, the sample parameters corresponding to the first terminal and the second terminal, or namely, the model parameters, are stored separately, which improves the data security of respective the first terminal and the second terminal.

In the present aspect, the loss value is calculated according to the first data of the first terminal, the second data of the second terminal, and the sample label corresponding to the second data. The homomorphic encryption algorithm is adopted to encrypt the data demanded for calculating the loss value, so that the second terminal cannot obtain the specific sample data of the first terminal during the calculation of model parameters, even jointly using the sample data of the first terminal and the second terminal. The loss value which is needed for model parameter, can be calculated without exposing the sample data of the first terminal and the second terminal. The security of the sample data regarding the first terminal and the second terminal is improved when calculating the model parameter.

Further, the third aspect is proposed regarding the federated-learning based method of acquiring the model parameter in the present disclosure.

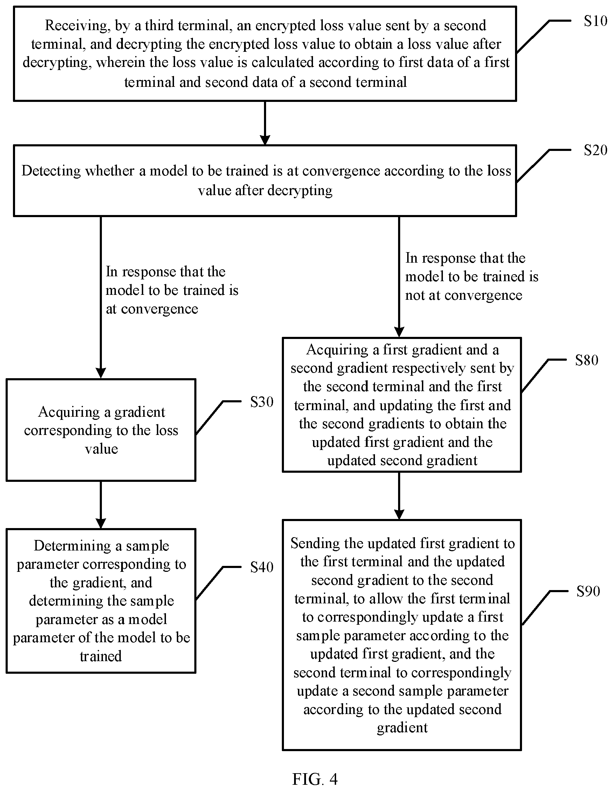

The difference between the third embodiment and the first or the second embodiment lies in that, referring to Fig. 4, the method further includes:

operation S80, in response that the model to be trained is not at convergence, acquiring a gradient and a gradient respectively sent by the second terminal and the first terminal, and updating the gradients to obtain the updated gradients.

In response that the model to be trained is not at convergence, the third terminal acquires a gradient and a gradient respectively sent by the second terminal and the first terminal and updates the gradients to obtain the updated gradients. Where the second terminal sends the loss value to the third terminal, the gradient is sent to the third terminal at the same time. The gradient sent to the third terminal is also encrypted by the homomorphic encryption algorithm through the public key sent by the third terminal. The formula for the second terminal to calculate its corresponding

$$g = \sum\left(\frac{1}{2}yw^{T}x - 1\right)\frac{1}{2}yx \qquad\qquad \left[\!\!\left[d\right]\!\!\right] = \left[\!\!\left[\left(\frac{1}{2}yw^{T}x - 1\right)\frac{1}{2}y\right]\!\!\right] = \left(\frac{1}{2}\left[\!\!\left[yw^{T}x\right]\!\!\right] + \left[\!\!\left[-1\right]\!\!\right]\right)\frac{1}{2}y$$

gradient    is                                                    ,                                                                                                             ,

$$\left[\!\!\left[g_{B}\right]\!\!\right] = \sum\left[\!\!\left[d\right]\!\!\right]x_{B}$$
. The gradient sent by that second terminal to the third terminal is represented as $\left[\!\!\left[g_{B}\right]\!\!\right]$.

After calculating $\left[\!\!\left[d\right]\!\!\right]$, the second terminal sends $\left[\!\!\left[d\right]\!\!\right]$ to the first terminal. When the first terminal receives $\left[\!\!\left[d\right]\!\!\right]$ sent by the second terminal, the first terminal calculates its corresponding gradient according to $\left[\!\!\left[d\right]\!\!\right]$ and sends its corresponding gradient to the third terminal. The formula for the first terminal to calculate its corresponding gradient according to $\left[\!\!\left[d\right]\!\!\right]$ is $\left[\!\!\left[g_{A}\right]\!\!\right] = \sum\left[\!\!\left[d\right]\!\!\right]x_{A}$.

In the present aspect, the third terminal may first decrypt the gradients sent by the first terminal and the second terminal by using its private key, and then derive the decrypted gradients to obtain the updated gradients. in some aspects, the third terminal may reduce or increase the decrypted gradients to some extent according to the characteristics of the model to be trained, so as to obtain the updated gradients.

Operation S90, sending the updated gradients to the first terminal and the second terminal, to allow the first terminal and the second terminal to update respective sample parameters according to the updated gradients.

Where, after the first terminal updates the sample parameter, the first terminal calculates the first data according to the updated sample parameter and a variable corresponding to a feature variable in intersection sample data, encrypts the first data, and sends the first data which is encrypted to the second terminal.

When the third terminal gets the updated gradient, it sends the updated gradient corresponding to the first terminal and the updated gradient corresponding to the second terminal. After the first terminal receives the updated gradient sent by the third terminal, the first terminal updates its corresponding sample parameter according to the updated gradient. Specifically, the formula used by the first terminal to update its corresponding sample parameter according to the updated gradient is $w_A = w_{A0} - \eta g_A$, where $w_A$ represents the updated sample parameter and $w_{A0}$ represents the sample parameter before updating, that is, the sample parameter used by the first terminal to calculate the first data before this update; $\eta$ is a preset coefficient, with its corresponding value can be set according to specific needs; $g_A$ is the updated gradient.

When the first terminal updates the sample parameters, the first terminal acquires the feature variables corresponding to the intersection sample data, determines the variable values corresponding to the feature variables, calculates the first data according to the variable values and the updated sample parameters, encrypts the first data, and sends the encrypted first data to the second terminal. The calculation of the first data by the first terminal has been described in detail in the second aspect, and will be omitted herein.

Further, the operation of "the second terminal to correspondingly update a sample parameter according to the updated second gradient", includes:

operation g, receiving, by the second terminal, the updated second gradient, calculating a product of the updated second gradient and a preset coefficient; and

operation h, subtracting the product from a sample parameter before updating, to obtain the updated second sample parameter.

When the second terminal receives the updated gradient sent by the third terminal, the second terminal calculates the product of the updated gradient and the preset coefficient, and subtracts the product from the sample parameter to obtain the updated sample parameter. Specifically, the formula used by the first terminal to update its corresponding sample parameters according to the updated gradient is $w_B = w_{B0} - \eta g_B$, where $w_B$ represents the updated sample parameters and $w_{B0}$ represents the sample parameters before updating, that is, the sample parameters used by the first terminal to calculate the first data before this update; $\eta$ is a preset coefficient, with its corresponding value can be set according to specific needs; $g_B$ is the updated gradient. Where, the $\eta$ corresponding to the first terminal and the second terminal may be the same or different.

Further, when the third terminal determines that the model to be trained is at convergence, the third terminal can update the corresponding gradients and send respectively the updated gradients to the first terminal and the second terminal, so that the first terminal and the second terminal can update sample parameters according to their respective updated gradient after receiving the updated gradient, and take the updated sample parameter as the model parameter.

When it is detected that the model to be trained is not at convergence, the third terminal updates the gradients and sends respectively the updated gradient to the first terminal and the second terminal, so that the first terminal and the second terminal can update the corresponding sample parameter according to the updated gradient until the model to be trained reaches the convergence, The accuracy is improved of the obtained analysis data of the model to be trained.

Further, the fourth aspect is proposed regarding the federated-learning based method of acquiring the model parameter in the present disclosure.

The difference between the fourth embodiment and the first, the second embodiment or the third embodiment lies in that, the method further includes:

Operation i, encrypting, by the first terminal, a first sample identifier with a pre-stored first public key, sending the encrypted first sample identifier to the second terminal, and detecting, by the first terminal, whether a second sample identifier sent by the second terminal is received, wherein the second sample identifier is encrypted by the second terminal with a pre-stored second public key.

When the model parameters of the model to be trained is needed, the first terminal encrypts the first sample identifier with a pre-stored first public key to obtain an encrypted first sample identifier, and sends the encrypted first sample identifier to the second terminal. The first terminal detects whether to receive the second sample identifier which is encrypted by the second public key and sent by the second terminal.

When the model parameters of the model to be trained is needed, the second terminal encrypts the second sample identifier with a pre-stored second public key to obtain an encrypted second sample identifier, and sends the encrypted second sample identifier to the first terminal.

It should be noted that the encrypted first sample identifier is obtained by the first terminal encrypting the data identifier corresponding to the sample data of the first terminal, and the second sample identifier is the data identifier corresponding to the sample data of the second terminal. Specifically, the first terminal may encrypt the first sample identifier with its pre-generated public key. The public keys used by the first terminal and the second terminal for encryption are generated by an asymmetric encryption algorithm.

Operation j, in response that the encrypted second sample identifier is received, secondarily encrypting the second sample identifier with the first public key to obtain a second encrypted value, and detecting whether a first encrypted value sent by the second terminal is received.

When the first terminal receives the encrypted second sample identifier sent by the second terminal, the first terminal uses its public key, that is, uses the first public key to secondarily encrypt the encrypted second sample identifier, records the secondarily encrypted sample identifier as the second encrypted value, and detects whether the first encrypted value sent by the second terminal is received. Where, when the second terminal receives the encrypted first sample identifier sent by the first terminal, the second terminal uses its public key, that is, uses the second public key to secondarily encrypt the encrypted second sample identifier, records the secondarily encrypted first sample identifier as the first encrypted value, and sends the first encrypted value to the first terminal.

Operation k, in response that the first encrypted value is received, judging whether the first encrypted value is equal to the second encrypted value; and

Operation l, in response that the first encrypted value is equal to the second encrypted value, determining that the first sample identifier is the same as the second sample identifier, and determining sample data corresponding to the first sample identifier as the intersection sample data intersected with the second terminal.

After the first terminal receives the secondarily encrypted value sent by the first terminal, the first terminal judges whether the first encrypted value is equal to the second encrypted value. If it is determined that the first encrypted value is equal to the second encrypted value, the first terminal determines that the corresponding sample data carrying the first sample identifier is intersection sample data intersected with the second terminal. If it is determined that the first encrypted value is not equal to the second encrypted value, the first terminal determines that the sample data carrying the first sample identifier is not the intersection sample data intersected with the second terminal. It can be understood that when the first encrypted value is equal to the second encrypted value, it indicates that the first sample identifier corresponding to the first encrypted value is the same as the second sample identifier corresponding to the second encrypted value.

For example, when the first terminal's public key is pub_a, and the second terminal's public key is pub_b, determining the intersection sample data is as follows: (1) the first terminal uses its public key pub_a to encrypt id_a (first sample identifier): id_a_fa = f(id_a, pub_a), and then sends id_a_fa to the second terminal, the second terminal secondarily encrypts the id_a with its public key, and obtain id_a_fa_fb = f(id_a_fa, pub_b). (2) The second terminal encrypts id_b (second sample id) with its public key pub_b: id_b_fb = f(id_b, pub_b), then sends id_b_fb to the first terminal. The first terminal then secondarily encrypts the encrypted id_b with its public key pub_a: id_b_fb_fa = f(id_b_fb, pub_a). The first terminal then sends the id_b_fb_fa to the second terminal. (3) The second terminal compares id_a_fa_fb (first encrypted value) and id_b_fb_fa (second encrypted value). If these two encrypted strings are equal, it indicates that id_a and id_b are the same.

If the sample data of the first terminal is {< id1: x1, x2 >, < id2: x1, x2>, <id3: x1, x2}, and the sample data of the second terminal is {<id2: x3, x4>, <id3: x3 , x4>, <id4: x3, x4 >}, the intersection sample data in the second terminal is {<id2: x3, x4>, <id3: x3, x4>}, and the intersection sample data in the first terminal is {<id2: x1, x2>, <id3: x1, x2>}.

It should be noted that the determining the intersection sample data by the second terminal carrying the same sample identifier between the second terminal and the first terminal is consistent with the determining the intersection sample data by the first terminal carrying the same sample identifier between the first terminal and the second terminal, which will not be described herein.

In determining model parameters, after obtaining the intersection sample data corresponding to the first terminal and the intersection sample data corresponding to the second terminal, the first terminal can divide the intersection sample data into several parts. The second terminal matches the sample identifier pairs according to the division of the first terminal, so as to divide its own intersection sample data.

In this aspect, the intersection sample data is obtained from the first terminal and the second terminal without the first terminal and the second terminal sacrificing their own data, which improves data security of the first terminal and the second terminal in the process of data calculation.

Further, the fifth aspect is proposed regarding the federated-learning based method of acquiring the model parameter in the present disclosure.

The difference between the fifth embodiment and the first, the second embodiment, the third embodiment or the fourth embodiment lies in that, the method further includes:

Operation m, in response that the second terminal determines a model parameter corresponding to the second terminal, and receives a request to execute the model parameter, sending, by the second terminal, the request to the first terminal, wherein after the first terminal receives the request, the first terminal returns a first prediction score to the second terminal, wherein the first prediction score is obtained according to a model parameter corresponding to the first terminal, and a variable value of feature variables corresponding to the request.

After the second terminal determines the model parameters, the second terminal detects whether the request for is received execution. When the second terminal receives the request for execution, the second terminal sends the request to the first terminal. When the first terminal receives the request for execution, the first terminal obtains its corresponding model parameters and variable values of feature variables corresponding to the request, calculates a first prediction score according to the model parameters and variable values, and sends the first prediction score to the second terminal. It can be understood that the formula for the first terminal to calculate the first prediction score is

$$w_A^T x_A = w_1 x_{i1} + w_2 x_{i2} \cdots w_n x_{in}$$. operation n, receiving, by the second terminal, the first prediction score, and calculating a second prediction score according to the model parameter corresponding to the second terminal, and the variable value of the feature variable corresponding to the request.

When the second terminal receives the first prediction score sent from the first terminal, the second terminal calculates a second prediction score according to the model parameter corresponding to the second terminal, and the variables of the feature variables corresponding to the request. Where the formula for the second terminal to calculate the second prediction score is $$w_B^T x_B = w_1 x_{i1} + w_2 x_{i2} \cdots w_n x_{in}$$.

Operation o, adding the first prediction score and the second prediction score to obtain a summed prediction score, inputting the summed prediction score into the model to be trained and obtaining a model score, and determining whether to execute the request according to the model score.

When the second terminal obtains the first prediction score and the second prediction score, the second terminal adds these two values to obtain a summed prediction score, inputs the summed prediction score into the model to be trained and obtains a score of the model, and determines whether to execute the request according to the model score.

Where, the summed prediction score is presented as: $$w^T x = w_A^T x_A + w_B^T x_B$$, the model to be trained is:

$$P(y=1|x) = \frac{1}{1 + \exp(-w^T x)}$$.

When obtaining the score of the model, the second terminal determines whether to execute the request according to the score of the model. If the model to be trained is determined as fraud model, and the request is a request for a loan, the calculated score of the model is larger or equal to a present score, the second terminal determines the model as a fraud model and rejects the request for the loan. And if the score of the model is smaller the preset score, the second terminal determines the request for a loan as authentic loan request, and executes the loan request.

In this aspect, the second terminal receives the request for execution, analyzes the request through the model to be trained. Then the second terminal determines whether to execute the request or not. The security is improved of the second terminal in the process of execution.

Further, in order to achieve the above purpose, the present disclosure provides a computer readable storage medium, on which a program which is federated-learning based for acquiring a model parameter is stored, and when the program is executed by a processor, the operation to realize the federated-learning based method of acquiring model parameter as described above is implemented.

The specific embodiments of the computer-readable storage medium of the present disclosure are basically the same as the above embodiments of the federated-learning based method of acquiring the model parameter, and will not be described herein.

It should be noted that in this document, the terms "comprising" "including" or any other variation thereof are intended to cover a non-exclusive inclusion, such that a process, method, article, or system that includes a list of elements includes not only those elements but also other elements not expressly listed, or elements inherent to such process, method, article, or system. Without further restrictions, an element defined by the statement "includes an" does not exclude the presence of another identical element in a process, method, article, or system including the element.

The aforementioned serial numbers regarding the embodiments of the present disclosure are for description only and do not represent the superiority and inferiority of the embodiments.

From the above description of the embodiments, those skilled in the art can clearly understand that the method of the above embodiments can be implemented by means of software plus necessary general-purpose hardware platforms. Of course, it can also be implemented by means of hardware, but in many cases the former is a better embodiment. Based on this understanding, the technical solution of the present disclosure can be embodied in the form of a software product, which is stored in a storage medium (such as ROM/RAM, magnetic disk, optical disk) as described above, and includes several instructions to cause a terminal device (which can be a mobile phone, a computer, a server, an air conditioner, or a network device, etc.) to perform the methods described in various embodiments of the present disclosure.

The above is only the preferred embodiment of the present disclosure and is not therefore limiting the scope of the present disclosure. Any equivalent structure or process change made by using the contents of the present specification and drawings, or directly or indirectly applied in other related technical fields, shall be included in the protection scope of the present disclosure.

**Claims**

1.  A federated-learning based method of acquiring a model parameter, **characterized in that**, the method comprises:

    receiving, by a third terminal, an encrypted loss value sent by a second terminal, and decrypting the encrypted loss value to obtain a loss value after decrypting, wherein the loss value is calculated according to first data of a first terminal and second data of the second terminal;
    detecting whether a model to be trained is at convergence according to the loss value after decrypting;
    in response that the model to be trained is at convergence, acquiring a gradient corresponding to the loss value; and
    determining a sample parameter corresponding to the gradient, and determining the sample parameter as a model parameter of the model to be trained.

2.  The method of claim 1, wherein prior to the operation of "receiving, by a third terminal, an encrypted loss value sent by a second terminal, and decrypting the encrypted loss value to obtain a loss value after decrypting", the method further comprises:

    receiving, by the second terminal, the first data which is encrypted and sent by the first terminal;
    calculating the second data corresponding to the first data and acquiring a sample label corresponding to the second data, wherein the sample label corresponding to the second data is identical to a sample label corresponding to the first data;
    calculating the loss value according to the first sample label, the first data and the second data; and
    encrypting the loss value by a homomorphic encryption algorithm to obtain the encrypted loss value, and sending the encrypted loss value to the third terminal.

3.  The method of claim 1, wherein after the operation of "detecting whether a model to be trained is at convergence according to the loss value", the method further comprises:

    in response that the model to be trained is not at convergence, acquiring a gradient and a gradient respectively sent by the second terminal and the first terminal, and updating the gradients to obtain the updated gradients; and
    sending the updated gradients to the first terminal and the second terminal, to allow the first terminal and the second terminal to update respective sample parameters according to the updated gradients,
    wherein, after the first terminal updates the first sample parameter, the first terminal calculates the first data according to the updated first sample parameter and a variable value corresponding to a feature variable in intersection sample data, encrypts the first data, and sends the first data which is encrypted to the second terminal.

4.  The method of claim 3, wherein the operation of "the second terminal to correspondingly update a sample parameter according to the updated second gradient", comprises:

    receiving, by the second terminal, the updated second gradient;
    calculating a product of the updated second gradient and a preset coefficient; and
    subtracting the product from the second sample parameter before updating, to obtain the updated second sample parameter.

5.  The method of claim 3, wherein prior to the operation of "receiving, by the third terminal, the encrypted loss value sent by the second terminal, and decrypting the encrypted loss value to obtain the loss value", the method further comprises:

    encrypting, by the first terminal, a first sample identifier with a pre-stored first public key;
    sending the encrypted first sample identifier to the second terminal;
    detecting, by the first terminal, whether a second sample identifier sent by the second terminal is received, wherein the second sample identifier is encrypted by the second terminal with a pre-stored second public key;
    in response that the encrypted second sample identifier is received, secondarily encrypting the second sample identifier with the first public key to obtain a second encrypted value, and detecting whether a first encrypted value sent by the second terminal is received;

in response that the first encrypted value is received, judging whether the first encrypted value is equal to the second encrypted value; and

in response that the first encrypted value is equal to the second encrypted value, determining that the first sample identifier is the same as the second sample identifier, and determining sample data corresponding to the first sample identifier as the intersection sample data intersected with the second terminal.

6. The method of claim 1, wherein after the operation of "determining a sample parameter corresponding to the gradient, and determining the sample parameter as a model parameter of the model to be trained", the method further comprises:

in response that the second terminal determines a model parameter corresponding to the second terminal, and receives a request to execute the model parameter, sending, by the second terminal, the request to the first terminal, and receiving a first prediction score from the first terminal, the first prediction score being obtained according to a model parameter corresponding to the first terminal, and a variable value of feature variables corresponding to the request;

calculating a second prediction score according to the model parameter corresponding to the second terminal, and the variable value of the feature variable corresponding to the request;

adding the first prediction score and the second prediction score to obtain a summed prediction score;

inputting the summed prediction score into the model to be trained and obtaining a model score; and

determining whether to execute the request according to the model score.

7. The method of claim 1, wherein the operation of "detecting whether a model to be trained is at convergence according to the loss value", further comprises:

acquiring a previous loss value sent by the second terminal for a last time;

recording the previous loss value as a first loss value, and recording the loss value after decrypting as a second loss value;

calculating a difference between the first loss value and the second loss value, and judging whether the difference is less than or equal to a preset threshold value; and

in response that the difference is less than or equal to the preset threshold, determining that the model to be trained is at convergence; or

in response that the difference is more than the preset threshold, determining that the model to be trained is not at convergence.

8. The method of claim 2, wherein the operation of "detecting whether a model to be trained is at convergence according to the loss value", further comprises:

acquiring a previous loss value sent by the second terminal for a last time, and recording the previous loss value as a first loss value, and recording the loss value after decrypting as a second loss value;

calculating a difference between the first loss value and the second loss value, and judging whether the difference is less than or equal to a preset threshold value; and

in response that the difference is less than or equal to the preset threshold, determining that the model to be trained is at convergence; or

in response that the difference is more than the preset threshold, determining that the model to be trained is not at convergence.

9. The method of claim 3, wherein the operation of "detecting whether a model to be trained is at convergence according to the loss value", further comprises:

acquiring a previous loss value sent by the second terminal for a last time;

recording the previous loss value as a first loss value, and recording the loss value after decrypting as a second loss value;

calculating a difference between the first loss value and the second loss value, and judging whether the difference is less than or equal to a preset threshold value; and

in response that the difference is less than or equal to the preset threshold, determining that the model to be trained is at convergence; or

in response that the difference is more than the preset threshold, determining that the model to be trained is not at convergence.

10. The method of claim 4, wherein the operation of "detecting whether a model to be trained is at convergence according to the loss value", further comprises:

acquiring a previous loss value sent by the second terminal for a last time;
recording the previous loss value as a first loss value, and recording the loss value after decryption as a second loss value;
calculating a difference between the first loss value and the second loss value, and judging whether the difference is less than or equal to a preset threshold value; and
in response that the difference is less than or equal to the preset threshold, determining that the model to be trained is at convergence; or
in response that the difference is more than the preset threshold, determining that the model to be trained is not at convergence.

11. The method of claim 5, wherein the operation of "detecting whether a model to be trained is at convergence according to the loss value", further comprises:

acquiring a previous loss value sent by the second terminal for a last time;
recording the previous loss value as a first loss value, and recording the loss value after decryption as a second loss value;
calculating a difference between the first loss value and the second loss value, and judging whether the difference is less than or equal to a preset threshold value; and
in response that the difference is less than or equal to the preset threshold, determining that the model to be trained is at convergence; or
in response that the difference is more than the preset threshold, determining that the model to be trained is not at convergence.

12. The method of claim 6, wherein the operation of "detecting whether a model to be trained is at convergence according to the loss value", further comprises:

acquiring a previous loss value sent by the second terminal for a last time;
recording the previous loss value as a first loss value, and recording the loss value after decryption as a second loss value;
calculating a difference between the first loss value and the second loss value, and judging whether the difference is less than or equal to a preset threshold value; and
in response that the difference is less than or equal to the preset threshold, determining that the model to be trained is at convergence; or
in response that the difference is more than the preset threshold, determining that the model to be trained is not at convergence.

13. A system of acquiring a model parameter, comprising a memory, a processor and a model program for acquiring the model parameter based on federated learning which is stored in the memory and can be executable on the processor, and when executed by the processor, the program implements the following operations:

receiving, by a third terminal, an encrypted loss value sent by a second terminal, and decrypting the encrypted loss value to obtain a loss value after decrypting, wherein the loss value is calculated according to first data of a first terminal and second data of the second terminal;
detecting whether a model to be trained is at convergence according to the loss value after decrypting;
in response that the model to be trained is at convergence, acquiring a gradient corresponding to the loss value; and
determining a sample parameter corresponding to the gradient, and determining the sample parameter as a model parameter of the model to be trained.

14. The system of claim 13, wherein prior to the operation of "receiving the encrypted loss value sent by the second terminal, by the third terminal, and decrypting the encrypted loss value to obtain the loss value", the processor is further configured to call the program stored in the memory and execute the following operations:

receiving, by the second terminal, the first data which is encrypted and sent by the first terminal;
calculating the second data corresponding to the first data and acquiring a sample label corresponding to the second data, wherein the sample label corresponding to the second data is identical to a sample label corresponding to the first data;
calculating the loss value according to the first sample label, the first data and the second data; and
encrypting the loss value by a homomorphic encryption algorithm to obtain the encrypted loss value, and sending the encrypted loss value to the third terminal.

**15.** The system of claim 13, wherein after the operation of "detecting whether the model to be trained is at convergence according to the loss value", the processor is further used to call the program stored in the memory and execute the following operations:

in response that the model to be trained is not at convergence, acquiring a gradient and a gradient respectively sent by the second terminal and the first terminal, and updating the gradients to obtain the updated gradients; and
sending the updated gradients to the first terminal and the second terminal, to allow the first terminal and the second terminal to update respective sample parameters according to the updated gradients,
wherein, after the first terminal updates the first sample parameter, the first terminal calculates the first data according to the updated first sample parameter and a variable value corresponding to a feature variable in intersection sample data, encrypts the first data, and sends the first data which is encrypted to the second terminal.

**16.** The system of claim 15, wherein the operation of "the second terminal to correspondingly update a sample parameter according to the updated second gradient", comprises:

receiving, by the second terminal, the updated second gradient;
calculating a product of the updated second gradient and a preset coefficient; and
subtracting the product from the second sample parameter before updating, to obtain the updated second sample parameter.

**17.** The system of claim 15, wherein prior to the operation of "receiving the encrypted loss value sent by the second terminal, by the third terminal, and decrypting the encrypted loss value to obtain the loss value", the processor is further configured to call the program stored in the memory and execute the following operations:

encrypting, by the first terminal, a first sample identifier with a pre-stored first public key;
sending the encrypted first sample identifier to the second terminal;
detecting, by the first terminal, whether a second sample identifier sent by the second terminal is received, wherein the second sample identifier is encrypted by the second terminal with a pre-stored second public key;
in response that the encrypted second sample identifier is received, secondarily encrypting the second sample identifier with the first public key to obtain a second encrypted value, and detecting whether a first encrypted value sent by the second terminal is received;
in response that the first encrypted value is received, judging whether the first encrypted value is equal to the second encrypted value; and
in response that the first encrypted value is equal to the second encrypted value, determining that the first sample identifier is the same as the second sample identifier, and determining sample data corresponding to the first sample identifier as the intersection sample data intersected with the second terminal.

**18.** The system of claim 13, wherein after the operation of "determining a sample parameter corresponding to the gradient, and determining the sample parameter as a model parameter of the model to be trained", the processor is further configured to call the program stored in the memory and execute the following operations:

in response that the second terminal determines a model parameter corresponding to the second terminal, and receives a request to execute the model parameter, sending, by the second terminal, the request to the first terminal, and receiving a first prediction score from the first terminal, the first prediction score being obtained according to a model parameter corresponding to the first terminal, and a variable value of feature variables corresponding to the request;
calculating a second prediction score according to the model parameter corresponding to the second terminal, and the variable value of the feature variable corresponding to the request;
adding the first prediction score and the second prediction score to obtain a summed prediction score;

inputting the summed prediction score into the model to be trained and obtaining a model score; and
determining whether to execute the request according to the model score.

19. The system of claim 13, wherein the operation of "detecting whether the model to be trained is at convergence according to the loss value", further comprises:

acquiring a previous loss value sent by the second terminal for a last time;
recording the previous loss value as a first loss value, and recording the loss value after decrypting as a second loss value;
calculating a difference between the first loss value and the second loss value, and judging whether the difference is less than or equal to a preset threshold value; and
in response that the difference is less than or equal to the preset threshold, determining that the model to be trained is at convergence; or
in response that the difference is more than the preset threshold, determining that the model to be trained is not at convergence.

20. A computer-readable storage medium, wherein a program is stored on the computer-readable storage medium, and when the program is executed by a processor, the operations of realizing the method of claim 1 are implemented.

1005

1001

Processor

1002

1003

1004

User interface

Network interface

| Operation system |
| Network communication module |
| User interface module |
| Program for federated-based learning to acquire the model parameter |
| Memory |

FIG. 1

Receiving, by a third terminal, an encrypted loss value sent by a second terminal, and decrypting the encrypted loss value to obtain a loss value after decrypting, wherein the loss value is calculated according to first data of a first terminal and second data of a second terminal — S10

Detecting whether a model to be trained is at convergence according to the loss value after decrypting — S20

Acquiring a gradient corresponding to the loss value — S30

Determining a sample parameter corresponding to the gradient, and determining the sample parameter as a model parameter of the model to be trained — S40

FIG. 2

Receiving, by the second terminal, the first data which is encrypted and sent by the first terminal; calculating the second data corresponding to the first data and acquiring a first sample label corresponding to the second data, where a second sample label corresponding to the first data is identical to the first sample label corresponding to the second data; receiving, by the second terminal, the first data which is encrypted and sent by the first terminal; calculating the second data corresponding to the first data and acquiring a first sample label corresponding to the second data, where a second sample label corresponding to the first data is identical to the first sample label corresponding to the second data

S50

Calculating the loss value according to the first sample label, the first data and the second data

S60

Encrypting the loss value by homomorphic encryption algorithm to obtain the encrypted loss value, and sending the encrypted loss value to the third terminal

S70

Receiving, by a third terminal, an encrypted loss value sent by a second terminal, and decrypting the encrypted loss value to obtain a loss value after decrypting wherein the loss value is calculated according to first data of a first terminal and second data of a second terminal

S10

Detecting whether a model to be trained is at convergence according to the loss value after decrypting

S20

Acquiring a gradient corresponding to the loss value

S30

Determining a sample parameter corresponding to the gradient, and determining the sample parameter as a model parameter of the model to be trained

S40

FIG. 3

Receiving, by a third terminal, an encrypted loss value sent by a second terminal, and decrypting the encrypted loss value to obtain a loss value after decrypting, wherein the loss value is calculated according to first data of a first terminal and second data of a second terminal — S10

Detecting whether a model to be trained is at convergence according to the loss value after decrypting — S20

In response that the model to be trained is at convergence

In response that the model to be trained is not at convergence

Acquiring a gradient corresponding to the loss value — S30

Acquiring a first gradient and a second gradient respectively sent by the second terminal and the first terminal, and updating the first and the second gradients to obtain the updated first gradient and the updated second gradient — S80

Determining a sample parameter corresponding to the gradient, and determining the sample parameter as a model parameter of the model to be trained — S40

Sending the updated first gradient to the first terminal and the updated second gradient to the second terminal, to allow the first terminal to correspondingly update a first sample parameter according to the updated first gradient, and the second terminal to correspondingly update a second sample parameter according to the updated second gradient — S90

FIG. 4

## INTERNATIONAL SEARCH REPORT

International application No.

**PCT/CN2019/079997**

| A. | CLASSIFICATION OF SUBJECT MATTER |
| --- | --- |

G06F 21/60(2013.01)i

According to International Patent Classification (IPC) or to both national classification and IPC

| B. | FIELDS SEARCHED |
| --- | --- |

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

EPODOC, WPI, CNPAT, CNKI, IEEE: 神经网络, 机器学习, 联邦, 联合, 模型, 参数, 建模, 梯度, 样本, 损失, 收敛, 训练, neural net+, machine, associate, parameter, model, gradient, federation, learning, loss, value, convergent, state

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 109165515 A (SHENZHEN QIANHAI WEIZHONG BANK CO., LTD.) 08 January 2019 (2019-01-08) <br> claims 1-9, and description, paragraphs [0030]-[0034] | 1-20 |
| X | CN 108229646 A (BEIJING SENSETIME TECHNOLOGY DEVELOPMENT CO., LTD.) 29 June 2018 (2018-06-29) <br> description, paragraphs [0087]-[0091] and [0149] | 1-20 |
| A | CN 107704930 A (ALIBABA GROUP HOLDING LIMITED) 16 February 2018 (2018-02-16) <br> entire document | 1-20 |
| A | US 6119112 A (INTERNATIONAL BUSINESS MACHINES CORPORATION) 12 September 2000 (2000-09-12) <br> entire document | 1-20 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 June 2019** | **27 June 2019** |

| Name and mailing address of the ISA/CN | Authorized officer |
| --- | --- |
| **China National Intellectual Property Administration** <br> **No. 6, Xitucheng Road, Jimenqiao Haidian District, Beijing** <br> **100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/079997**

| Patent document cited in search report | | | Publication date (day/month/year) | Patent family member(s) | Publication date (day/month/year) |
|---|---|---|---|---|---|
| CN | 109165515 | A | 08 January 2019 | None | |
| CN | 108229646 | A | 29 June 2018 | None | |
| CN | 107704930 | A | 16 February 2018 | None | |
| US | 6119112 | A | 12 September 2000 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 201810913275